# EUROPÄISCHE PATENTSCHRIFT

(11) **EP 1 228 137 B1**
(45) Veröffentlichungstag und Bekanntmachung des Hinweises auf die Patenterteilung: **04.08.2004**
(21) Anmeldenummer: 00965888.1
(22) Anmeldetag: 22.08.2000
(51) Int. Cl.: C08K 5/5353, C08K 5/5357, C08L 69/00

(54) **FLAMMWIDRIGE POLYCARBONAT-FORMMASSEN**
FLAME-RESISTANT POLYCARBONATE MOULDING MATERIALS
MATIERES MOULABLES DE POLYCARBONATE IGNIFUGEANTES

(30) Priorität: 02.09.1999 DE 19941826
(43) Veröffentlichungstag der Anmeldung: 07.08.2002
(73) Patentinhaber: Bayer Aktiengesellschaft, 51368 Leverkusen (DE)
(72) Erfinder: ZOBEL, Michael, 40547 Düsseldorf (DE); ECKEL, Thomas, 41540 Dormagen (DE); DERR, Torsten, 41542 Dormagen (DE); WITTMANN, Dieter, 51375 Leverkusen (DE)
(86) Internationale Anmeldenummer: PCT/EP2000/008172
(87) Internationale Veröffentlichungsnummer: WO 2001/018106

(56) Entgegenhaltungen:
- EP-A- 0 594 553
- US-A- 5 578 666
- US-A- 5 844 028

## Beschreibung

Die vorliegende Erfindung betrifft mit Phosphonataminen ausgerüstete PolycarbonatFormmassen, die flammwidrig sind und ein gutes mechanisches Eigenschaftsniveau, insbesondere hohe Wärmeformbeständigkeit aufweisen und juicing-arm sind.

US-P 4 073 767 und 5 844 028 beschreiben cyclische Phosphorverbindungen einschließlich Phosphorinan-Ringe als geeignete Flammschutzmittel für Polyurethane, Polyester, Polycarbonate und Polyamide. In US-P 4 397 750 werden bestimmte cyclische Phosphonatester als effiziente Flammschutzmittel für Polypropylen und andere Polyolefine beschrieben. In US-P 5 276 066 und US-P 5 844 028 werden bestimmte (1,3,2-Dioxaphosphorinanmethan)-Amine beschrieben, die als Flammschutzmittel in Polyurethanen, Polyestern, Styrolpolymeren, Polyvinylchlorid, Polyvinylacetat oder Polycarbonat eingesetzt werden können.

US-P 3 505 431, FR-P 1 371 139, US-P 3 711 577, US-P 4 054 544 beschreiben acyclische Trisphosphonatamine, die zum Teil halogeniert sind.

In EP-A 0 640 655 werden Formmassen aus aromatischem Polycarbonat, styrolhaltigcn Copolymerisaten und Pfropfpolymerisaten beschrieben, die mit monomeren und/oder oligomeren Phosphorverbindungen flammwidrig ausgerüstet werden können.

In EP-A 0 363 608 werden flammwidrige Polymermischungen aus aromatischem Polycarbonat, styrolhaltigem Copolymer oder Pfropfcopolymer sowie oligomeren Phosphaten als Flammschutzadditve beschrieben. Für manche Anwendungen, wie beispielsweise Formteile im Innern von Gehäuseteilen, ist die Wärmeformbeständigkeit dieser Mischungen oft nicht ausreichend.

In US-P 5 061 745 werden Polymenmischungen aus aromatischem Polycarbonat, ABS-Pfropfpolymerisat und/oder styrolhaltigem Copolymer und Monophosphaten als Flammschutzadditive beschrieben. Zur Herstellung dünnwandiger Gehäuseteile ist das Niveau der Spannungsrissbeständigkeit dieser Mischungen oft nicht ausreichend.

Aufgabe der vorliegenden Erfindung ist es daher, flammwidrige PC-Formmassen bereitzustellen, die eine ausgezeichnete Wärmeformbeständigkeit, gute mechanische Eigenschaften und geringe Flüchtigkeit der Phosphorkomponenten in der Formmasse (juicing-arm) aufweisen.

Es wurde nun überraschenderweise gefunden, dass durch den Einsatz der erfindungsgemäßen Phosphonatamine flammwidrige Formmassen erhalten werden, die Formkörper mit einem sehr guten mechanischen Eigenschaftsniveau und einer herausragenden Wärineformbständigkeit ergeben.

Gegenstand der Erfindung sind daher Zusammensetzungen enthaltend
- A): 5 bis 95, vorzugsweise 10 bis 90 Gew.-Teile, besonders bevorzugt 20 bis 80 Gew.-Teile aromatisches Polycarbonat und/oder Polyestercarbonat
- B): 1 bis 60, vorzugsweise 1 bis 40 Gew.-Teile, besonders bevorzugt 2 bis 30 Gew.-Teile, wenigstens eines Pfropfpolymerisats von
B.1 5 bis 95, vorzugsweise 20 bis 60 Gew.-% einem oder mehreren Vinylmonomeren auf
B.2 5 bis 95, vorzugsweise 40 bis 80 Gew.-% einem oder mehreren Pfropfgrundlagen mit einer Glasumwandlungstemperatur <10°C, vorzugsweise 0°C, besonders bevorzugt <-20°C und einer mittleren Teilchengröße (d₅₀-Wert) von 0,05 bis 5 µm, vorzugsweise 0,20 bis 0,35 µm, besonders bevorzugt 0,25 bis 0,30 µm,
- C): 0 bis 50, vorzugsweise 1 bis 30, besonders bevorzugt 2 bis 25, Gew.-Teile thermoplastisches Vinyl(co)polymerisat und/oder Polyalkylentetrephthalat,
- D): 0,1 bis 30 Gew.-Teile, vorzugsweise 1 bis 25 Gew.-Teile, besonders bevorzugt 2 bis 20 Gew.-Teile Phosphonatamin der Formel (I)

A_{3-y}-N-B_{y} (I),
in welcher
- A: für einen Rest der Formel (IIa) 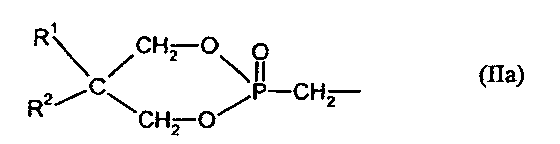
oder (IIb) 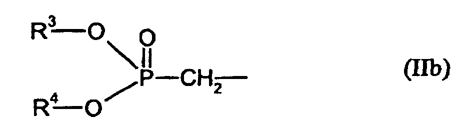 steht,
- R¹ und R²: unabhängig voneinander für unsubstituiertes oder substituiertes C₁-C₁₀-Alkyl oder für unsubstituiertes oder substituiertes C₆-C₁₀-Aryl, stehen,
- R³ und R⁴: unabhängig voneinander für unsubstituiertes oder substituiertes C₁-C₁₀-Alkyl oder unsubstituiertes oder substituiertes C₆-C₁₀-Aryl stehen oder
- R³ und R⁴: zusammen für unsubstituiertes oder substituiertes C₃-C₁₀-Alkylen stehen,
- y: die Zahlenwerte 0, 1 oder 2 bedeuten und
- B: unabhängig für Wasserstoff, gegebenenfalls halogeniertes C₂-C₈-Alkyl, unsubstituiertes oder substituiertes C₆-C₁₀-Aryl steht.

Als Komponente E) enthalten die Zusammensetzungen 0 bis 5 Gew.-Teile, vorzugsweise 0,1 bis 1 Gew.-Teil, besonders bevorzugt 0,1 bis 0,5 Gew.-Teile, fluoriertes Polyolefin.

Die Summe der Gew.-Teile aller Komponenten A+B+C+D+E ergibt 100.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964, sowie die DE-AS 1 495 626, DE-OS 2 232 877, DE-OS 2 703 376,

DE-OS 2 714 544, DE-OS 3 000 610, DE-OS 3 832 396; zur Herstellung aromatischer Polyestercarbonate z.B. DE-OS 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigem, beispielsweise Triphenolen oder Tetraphenolen.

Diphenole zur Herstellung der aromatischen Polycarbonate und/oder aromatischen Polyestercarbonate sind vorzugsweise solche der Formel (III) 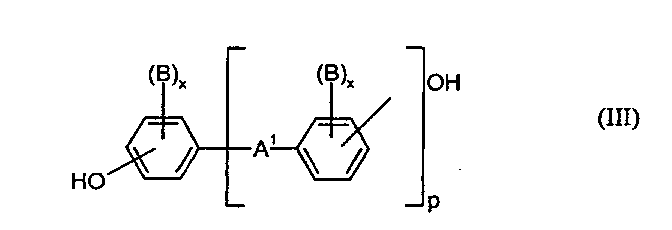 wobei
- A¹: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, welches mit weiteren gegebenenfalls Heteroatome enthaltenden aromatischen Ringen kondensiert sein kann, oder ein Rest der Formel 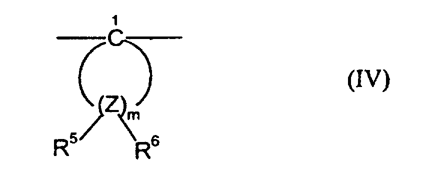 oder ein Rest der Formel (V) 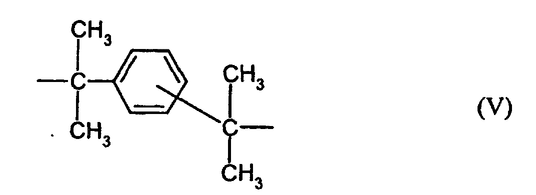
- B: unabhängig voneinander C₁-C₈-Alkyl, vorzugsweise C₁-C₄-Alkyl, insbesondere Methyl, Halogen, vorzugsweise Chlor und/oder Brom, C₆-C₁₀-Aryl, vorzugsweise Phenyl, C₇-C₁₂-Aralkyl, Phenyl-C₁-C₄-Alkyl, vorzugsweise Benzyl,
- x: jeweils unabhängig voneinander 0, 1 oder 2,
- p: 1 oder 0 sind, und
- R⁵ und R⁶: für jedes Z individuell wählbar, unabhängig voneinander, Wasserstoff oder C₁-C₆-Alkyl, vorzugsweise Wasserstoff, Methyl und/oder Ethyl,
- Z: Kohlenstoff und
- m: eine ganze Zahl von 4 bis 7, bevorzugt 4 oder 5 bedeuten,
mit der Maßgabe, dass an mindestens einem Atom Z
R⁵ und R⁶ gleichzeitig Alkyl sind.

Bevorzugte Diphenole sind Hydrochinon, Resorcin, 4,4'-Dihydroxydiphenyl, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole wie deren kernbromierte und/oder kernchlorierte Derivate.

Besonders bevorzugte Diphenole sind 4,4'-Diphenylphenol, Bisphenol-A, 2,4- Bis-(4-hydroxyphenyl)-2-methylbutan, 1,1- Bis-(4-hydroxyphenyl)-cyclohexan, 1,1- Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis-(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-% und 10 Mol-%, bezogen auf die Molsumme der jeweils eingesetzten Diphenole.

Die thermoplastischen, aromatischen Polycarbonate haben mittlere Gewichtsmittelmolekulargewichte (M_{W}, gemessen z.B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an ≥ drei-funktionellen Verbindungen, beispielsweise solchen mit ≥ drei phenolischen Gruppen.

Geeignet sind sowohl Homopolycarbonate als auch Copolycarbonate. Zur Herstellung erfindungsgemäßer Copolycarbonate als Komponente A können auch 1 bis 25 Gew.-%, vorzugsweise 2,5 bis 25 Gew.-% (bezogen auf die Gesamtmenge an einzusetzenden Diphenolen), Polydiorganosiloxane mit Hydroxy-aryloxy-Endgruppen eingesetzt werden. Diese sind bekannt (s. beispielsweise aus US-Patent 3 419 634) bzw. nach literaturbekannten Verfahren herstellbar. Die Herstellung Polydiorganosiloxanhaltiger Copolycarbonate wird z.B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere an 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure.

Besonders bevorzugt sind Gemische der Disäuredichloride der Isopthalsäure und der Terepthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrechem auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis-(4-hydroxyphenyl-isopropyl)-phenol, Tetra-(4-hydroxyphenyl)-methan, 2,6-Bis-(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis-[4,4'-dihydroxytri-phenyl)-methyl)-benzol, in Mengen von 0,01 bis 1,0 Mol-%, bezogen auf eingesetzte Diphenole, verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summc an Estergruppen und Carbonatgruppen.

Sowohl die Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polyestercarbonate liegt im Bereich 1,18 bis 1,4, vorzugsweise 1,22 bis 1,3 (gemessen an Lösungen von 0,5 g Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Die erfindungsgemäß Komponente B stellt Pfropfpolymerisate dar. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, substituierte Styrole, Acrylnitril, Ethylen, Propylen, Vinylacetat und (Meth)-Acrylsäureester mit 1 bis 18 C-Atomen in der Alkoholkomponente; also Polymerisate, wie sie z.B. in Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind. Bevorzugte Polymerisate B sind partiell vemetzt und besitzen Gelgehalte von über 20 Gew.-%, vorzugsweise über 40 Gew.-%, insbesondere über 60 Gew.-%.

Bevorzugte Pfropfpolymerisate B umfassen Pfropfpolymerisate aus:
- B.1: 5 bis 95, vorzugsweise 30 bis 80 Gew.-Teile, einer Mischung aus
B.1.1 50 bis 99 Gew.-Teilen Styrol, α-Methylstyrol, halogen- oder methylkemsubstituierten Styrolen, Methylmethacrylat oder Mischungen dieser Verbindungen und
B.1.2 1 bis 50 Gew.-Teilen Acrylnitril, Methacrylnitril, Methylmethacrylat, Maleinsäureanhydrid, C₁-C₄-alkyl- bzw. phenyl-N-substituierten Maleinimiden oder Mischungen dieser Verbindungen auf
- B.2: 5 bis 95, vorzugsweise 20 bis 70 Gew.-Teilen Polymerisat mit einer Glasübergangstemperatur unter -10°C, vorzugsweise auf Dien- und/oder Alkylacrylat-Basis.

Besonders bevorzugte Pfropfgrundlage B.2 ist Polybutadien mit gegebenenfalls bis zu 30 Gew.-% Styrol oder Acrylnitril als Comonomer.

Bevorzugte Pfropfpolymerisate B sind z.B. mit Styrol und/oder Acrylnitril und/oder (Meth)-Acrylsäurealkylestern gepfropfte Grundlagen B.2 wie Polybutadiene, Butadien/Styrol-Copolymerisate und Acrylatkautschuke; d.h. Copolymerisate der in der DE-OS 1 694 173 (=US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol oder Butadien/Acrylnitril-Copolymerisate, Polyisobutene oder Polyisoprene, wie sie z.B. in der DE-OS 2 348 377 (=US-PS 3 919 353) beschrieben sind.

Besonders bevorzugte Polymerisate B sind z.B. ABS-Polymerisate, wie sie z.B. in der DE-OS 2 035 390 (=US-PS 3 644 574) oder in der DE-OS 2 248 242 (=GB-PS 1 409 275) beschrieben sind.

Besonders bevorzugte Pfropfpolymerisate B sind erhältlich durch Pfropfreaktion von
- α: 10 bis 70, vorzugsweise 15 bis 50, insbesondere 20 bis 40 Gew.-%, bezogen auf Pfropfpolymisat B, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol, als Pfropfauflage B.1 auf.
- β: 30 bis 90, vorzugsweise 50 bis 85, insbesondere 60 bis 80 Gew.-%, bezogen auf Pfropfpolymisat B, eines Butadienpolymerisats mit mindestens 50 Gew.-%, bezogen auf β, Butadienresten als Pfropfgrundlage B.2.

Vorzugsweise beträgt der Gelanteil der Pfropfgrundlage β mindestens 70 Gew.-% (in Toluol gemessen), der Pfropfgrad G 0,15 bis 0,55 und der mittlere Teilchendurchmesser d₅₀ des Pfropfpolymerisats B.2 0,05 bis 2 µm, vorzugsweise 0,1 bis 0,6 µm.

(Meth)-Acrylsäureester α sind Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Der Pfropfgrad G bezeichnet das Gewichtsverhältnis von aufgepfropften Pfropfmonomeren zur Pfropfgrundlage und ist dimensionslos.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate B sind z.B. auch Pfropfpolymerisate aus
- τ.: 20 bis 90 Gew.-%, bezogen auf Komponente B, Acrylatkautschuk mit einer Glasübergangstemperatur <-20°C als Pfropfgrundlage B.2 und
- δ.: 10 bis 80 Gew.-%, bezogen auf Komponente B, mindestens eines polymerisierbaren, ethylenisch ungesättigten Monomeren als Pfropfmonomere C.1.

Die Acrylatkautschuke τ der Polymerisate B sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethyl-hexylester; Halogenalkylester, vorzugsweise Halogen-C₁-C₈-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinylund Triallylcyanurat; polyfunktionelle Vinylverbindungen, wie Di- und Trivinylbenzole; aber auch Triallylphosphat und Diallylphthalat.

Bevorzugt vemetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vemetzenden Monomere beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugt "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in Dimethylformamid bestimmt (M. Hoffmann, H. Krömer, R. Kuhn, Polymeranalytik I und II, Georg Thieme-Verlag, Stuttgart 1977).

Die Pfropfpolymerisate B können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomere in Gegenwart der Pfropfgrundlage gewonnen werden.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mitanfallen.

### Komponente C

Die Komponente C umfasst ein oder mehrere thermoplastische Vinyl(co)polymerisate C.1, Polyalkylenterephthalate C.2 oder Mischungen hieraus.

Geeignet sind als (Co)Polymerisate C.1 Polymerisate von mindestens einem Monomeren aus der Gruppe der Vinylaromaten, Vinylcyanide, wie ungesättigte Nitrile, (Meth)Acrylsäure-C₁-C₈-Alkylester, ungesättigte Carbonsäuren sowie Derivate wie Anhydride und Imide ungesättigter Carbonsäuren.

Insbesondere geeignet sind (Co)Polymerisate aus
- C.1.1: 50 bis 99 Gew.-Teilen Vinylaromaten und/oder kernsubstituierten Vinylaromaten, wie beispielsweise Styrol, α-Methylstyrol, p-Methylstyrol, p-Chlorstyrol, und/oder Methacrylsäure-(C₁-C₄)-Alkylestern, wie z.B. Methylmethacrylat, Ethylmethacrylat, und
- C.1.2: 1 bis 50 Gew.-Teilen Vinylcyanide, wie ungesättigte Nitrile, beispielsweise Acrylnitril und Methacrylnitril und/oder (Meth)Acrylsäure-(C₁-C₈)-Alkylester, z.B. Methylmethacrylat, n-Butylacrylat, t-Butylacrylat, und/oder ungesättigte Carbonsäuren, wie Maleinsäure und/oder Derivate, wie Anhydride und Imide ungesättigter Carbonsäuren, wie beispielsweise Maleinsäureanhydrid und N-Phenyl-Maleinimid.

Die (Co)Polymerisate C.1 sind harzartig, thermoplastisch und kautschukfrei.

Besonders bevorzugt sind Copolymerisate aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate gemäß Komponente C besitzen vorzugsweise Molekulargewichte M_{W} (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestem) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente D

Die erfindungsgemäßen Formmassen enthalten als Flammschutzmittel wenigstens eine Phosphonatamin-Verbindung der Formel (I)

A_{3-y}-N-B_{y} (I),

in welcher
A für 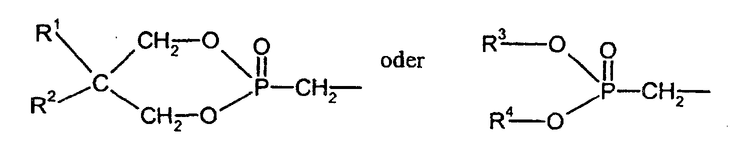 steht,
wobei
- R¹, R², R³ und R⁴: sowie B und y die oben angegebene Bedeutung haben.
- B: steht vorzugsweise unabhängig für Wasserstoff, für Ethyl, n- oder iso-Propyl, welche durch Halogen substituiert sein können, unsubstituiertes oder durch C₁-C₄-Alkyl und/oder Halogen substituiertes C₆-C₁₀-Aryl, insbesondere Phenyl oder Naphthyl.

Alkyl in R¹, R², R³ und R⁴ steht unabhängig vorzugsweise für Methyl, Ethyl, n-Propyl, iso-Propyl, n-, iso-, sec. oder tert. Butyl, Pentyl oder Hexyl.

Substituiertes Alkyl in R¹, R², R³ und R⁴ steht unabhängig vorzugsweise für durch Halogen substituiertes C₁-C₁₀-Alkyl, insbesondere für ein- oder zweifach substituiertes Methyl, Ethyl, n-Propyl, iso-Propyl, n-, iso-, sec. oder tert.-Butyl, Pentyl oder Hexyl.

R³ und R⁴ bilden zusammen mit dem Kohlenstoff, an das sie gebunden sind, vorzugsweise Cyclopentyl, Cyclohexyl, Cycloheptyl oder Cyclooctyl, insbesondere Cyclopentyl oder Cyclohexyl.

C₆-C₁₀-Aryl steht in R¹, R², R³ und R⁴ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

Beispielhaft und vorzugsweise werden genannt: 5,5,5',5',5",5"-Hexamethyltris(1,3,2-dioxaphosphorinan-methan)amin-2,2',2"-trioxid der Formel (I-1)

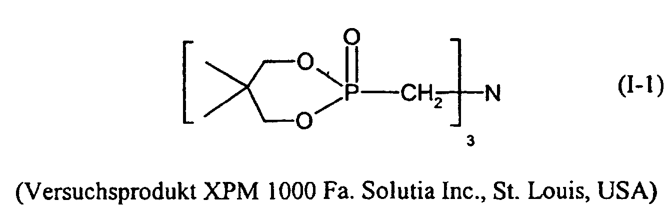

1,3,2-Dioxaphosphorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-dichloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

### Bevorzugt sind weiterhin:

Verbindungen der Formel (I-2) oder 1-3) 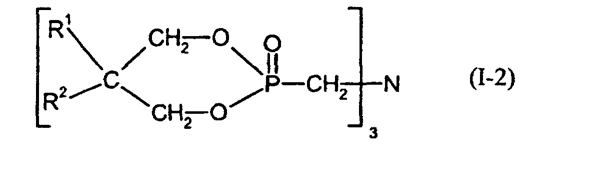 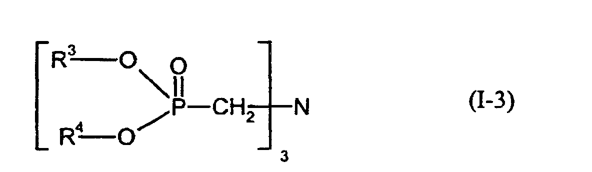 wobei
R¹, R², R³ und R⁴ die oben angegebenen Bedeutungen haben.

Besonders bevorzugt sind Verbindungen der Formel (I-2), (I-1). Besonders bevorzugt sind auch die oben genannten Einzelverbindungen.

Die Verbindungen der Formel (I) können nach folgenden Verfahren hergestellt werden:
- a): PCl₃ wird zu einer Mischung von 1,3-Diol-Derivaten, Wasser und einem organischen Lösungsmittel bei einer Temperatur von 10-60°C zugegeben. Man erhält dabei ein 5,5-disubstituiertes 1,3,2-Dioxaphosphorinan-2-oxid der Formel (Ia) 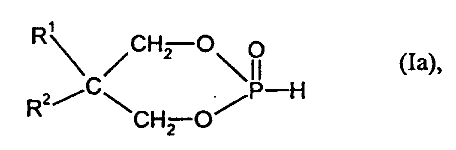 wobei R₁ und R₂ die oben genannte Bedeutung haben,
- b): nach Reinigung wird das 1,3,2-Dioxaphosphorinan-2-oxid in Paraformaldehyd mit einem Amin B_{y}NH_{3-y}, wobei B und y die oben genannte Bedeutung haben, zur Reaktion gebracht,
- c): nach erneuter Reinigung und Trocknung wird das Phosphonatamin der Formel (I) erhalten.

Eine detailierte Beschreibung des Herstellungsverfahren kann aus US-Patentschrift 5 844 028 entnommen werden.

### Komponente E

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1 000, vorzugsweise 0,08 bis 20 µm. Im allgemeinen haben die fluorierten Polyolefine E eine Dichte von 1,2 bis 2,3 g/cm³. Bevorzugt fluorierte Polyolefine E sind Polytetrafluorethylen, Polyvinylidenfluorid, Tetrafluorethylen (Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modem Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate E mit Emulsionen der Pfropfpolymerisate B eingesetzt.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm³ bis 2,3 g/cm³.

Weitere bevorzugte Zubereitungen sind die fluorierten Polyolefine E:
- E.1): als koagulierte Mischung mit mindestens einer der Komponenten A bis C, wobei das fluorierte Polyolefin E bzw. Polyolefingemisch als Emulsion mit mindestens einer Emulsion der Komponenten A bis C gemischt und anschließend koaguliert wird
oder
- E.2): als Präcompound mit mindestens einer der Komponenten A bis C, wobei die fluorierten Polyolefine E als Pulver mit einem Pulver oder einem Granulat mindestens einer Komponente A bis C vermischt und in der Schmelze, im allgemeinen bei Temperaturen von 208°C bis 330°C in den üblichen Aggregaten wie Innenkneter, Extruder oder Doppelwellenschnecken, compoundiert wird.

Bevorzugte Zubereitungen für die fluorierten Polyolefine E sind koagulierte Mischungen mit einem Pfropfpolymerisat B oder einem Vinyl(co)polymerisat C.1.

Zur Herstellung einer koagulierten Mischung aus B und E wird zuerst eine wässrige Emulsion (Latex) eines Pfropfpolymerisates B mit einer feinteiligen Emulsion eines fluorierten Polyolefins E vermischt; geeignete Emulsionen von fluorierten Polyolefinen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente A, B und C enthält nicht den Anteil des Pfropfpolymerisats, Vinyl(co)polymerisat bzw. Polycarbonat für die koagulierte Mischung gemäß E.1) und E.2).

In der Emulsionsmischung liegt das Gleichgewichtsverhältnis Pfropfpolymerisat B bzw. (Co)polymerisate zum fluorierten Polyolefin E bei 95:5 bis 60:40, vorzugsweise 90:10 bis 50:50. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon 30 N angeboten.

Die erfindungsgemäßen Formmassen können wenigstens eines der üblichen Additive, wie Gleit- und Entformungsmittel, Nukleiermittel, Antistatika, Stabilisatoren sowie Farbstoffe, Pigmente und/oder Verstärkungsmaterialien enthalten. Als anorganische Verslärkungsmaterialien kommen Glasfasern, ggf. geschnitten oder gemahlen, Glasperlen, Glaskugeln, blättchenförmiges Verstärkungsmaterial, wie Kaolin, Talk, Glimmer, Mika, Kohlefasern in Frage. Vorzugsweise werden als Verstärkungsmaterial geschnittene oder gemahlene Glasfasern, vorzugsweise mit einer Länge von 1 bis 10 mm und einem Durchmesser von <20µm in einer Menge von 1 bis 40 Gew.-Teilen eingesetzt; vorzugsweise sind die Glasfasern oberflächenbehandelt.

Die erfindungsgemäßen Formmassen können darüberhinaus wenigstens eine polare Verbindung wenigstens eines der Metalle der 1. bis 5. Hauptgruppe oder der 1. bis 8. Nebengruppe des Periodensystems mit mindestens einem Element ausgewählt aus der Gruppe von Sauerstoff, Schwefel, Bor, Kohlenstoff, Phosphor, Stickstoff, Wasserstoff und Silizium als feinstverteiltes anorganisches Pulver enthalten. Vorzugsweise werden als polare Verbindung ein Oxid oder Hydroxid, vorzugsweise TiO₂, SiO₂, SnO₂, ZnO, Böhmit, ZrO₂, Al₂O₃, Eisenoxide, deren Mischungen und dotierte Verbindungen, besonders bevorzugt Böhmit oder TiO₂, mit einem durchschnittlichen Teilchendurchmesscr von <200 nm, vorzugsweise 0,1 - 100 nm, besonders bevorzugt 1 - 50 nm, eingesetzt.

Die erfindungsgemäßen Formmassen können ein oder mehrere weitere, gegebenenfalls synergistisch wirkenden Flammschutzmittel enthalten. Beispielhaft werden als weitere Flammschutzmittel organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen, wie Antimonoxide, Bariummetaborat, Hydroxoantimonat, Zirkonoxid, Zirkonhydroxid, Molybdenoxid, Ammoniummolybdat, Zinkborat, Ammoniumborat und Zinnoxid sowie Siloxanverbindungen genannt. Diese Flammschutzmittel werden im allgemeinen in einer Menge bis zu 20 Gew.-% (bezogen auf die Gesamt-Formmasse) zugesetzt.

Weiterhin sind als Flammschutzmittel Phosphorverbindungen der Formel (VI) geeignet, 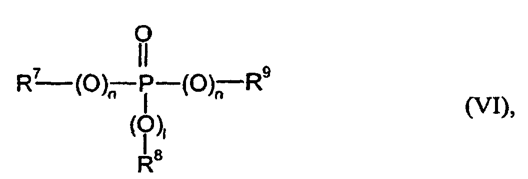 in der
- R⁷, R⁸ und R⁹: unabhängig voneinander ein gegebenenfalls halogeniertes C₁-C₈-Alkyl oder ein gegebenenfalls halogeniertes und/oder alkyliertes C₅-C₆-Cycloalkyl oder ein gegebenenfalls halogeniertes und/oder alkyliertes und/oder aralkyliertes C₆-C₃₀-Aryl, und
"n" und "l" unabhängig voneinander 0 oder 1 sind.

Diese Phosphorverbindungen sind generell bekannt (siehe beispielsweise Ullmann, Enzyklopädie der technischen Chemie, Band 18, Seiten 301 ff, 1979 und EP-A 345 522). Die aralkylierten Phosphorverbindungen sind beispielsweise in der DE-OS 38 24 356 beschrieben.

Gegebenenfalls halogenierte C₁-C₈-Alkylreste gemäß (VI) können einfach oder mehrfach halogeniert, linear oder verzweigt sein. Beispiele für Alkylreste sind Chlor-ethyl, 2-Chlorpropyl, 2,3-Dibrompropyl, Butyl, Methyl oder Octyl.

Gegebenenfalls halogenierte und/oder alkylierte C₅- oder C₆-Cycloalkyle gemäß (VI) sind gegebenenfalls einfach bis mehrfach halogenierte und/oder alkylierte C₅oder C₆-Cycloalkyle, also z.B. Cyclopenyl, Cyclohexyl, 3,3,5-Trimethylcyclohexyl und vollchloriertes Cyclohexyl.

Gegebebenenfalls halogenierte und/oder alkylierte und/oder aralkylierte C₆-C₃₀-Arylreste gemäß (VI) sind gegebenenfalls ein oder mehrkernig, einfach oder mehrfach halogeniert und/oder alkyliert und/oder aralkyliert, z.b. Chlorphenyl, Bromphenyl, Pentachlorphenyl, Pentabromphenyl, Phenyl, Kresyl, Isopropylphenyl, benzylsubstituiertes Phenyl und Naphthyl.

Bevorzugt stehen R⁷, R⁸ und R⁹ unabhängig voneinander für Methyl, Ethyl, Butyl, Octyl, Phenyl, Kresyl, Cumyl oder Naphthyl. Besonders bevorzgut stehen R⁵, R⁶ und R⁷ unabhängig voneinander für Methyl, Ethyl, Butyl, gegebenenfalls durch Methyl und/oder Ethyl substituiertes Phenyl.

Erfindungsgemäß einsetzbare Phosphorverbindungen gemäß Formel (VI) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(pbenzylphenyl)phosphat, Triphenylphosphinoxid, Methanphosphonsäuredimethylester, Methanphosphonsäuredipenthylester und Phenylphosphonsäurediethylester.

Geeignete Flammschutzmittel sind auch dimere und oligomere Phosphate, wie beispielsweise in der EP-A-0 363 608 beschrieben.

Die erfindungsgemäßen Formmassen können als Flammschutzmittel Phosphorverbindungen gemäß Formel (VII) enthalten,

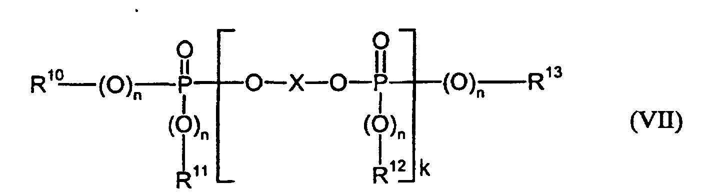

In der Formel stehen R¹⁰, R¹¹, R¹² und R¹³, unabhängig voneinander für jeweils gegebenenfalls halogeniertes C₁-C₈-Alkyl, C₅-C₆-Cycloalkyl, C₆-C₂₀-Aryl oder C₇-C₁₂-Aralkyl.

Bevorzugt stehen R¹⁰, R¹¹, R¹² und R¹³ unabhängig voneinander für C₁-C₄-Alkyl, Phenyl, Naphthyl oder Phenyl-C₁-C₄-alkyl. Die aromatischen Gruppen R¹⁰, R¹¹, R¹² und R¹³ können ihrerseits mit Halogen- und/oder Alkylgruppen, vorzugsweise Chlor, Brom und/oder C₁-C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (VII) bedeutet einen ein- oder mehrkernigen aromaischen Rest mit 6 bis 30 C-Atomen. Dieser leitet sich vorzugsweise von Diphenolen der Formel (III) ab. Besonders bevorzugt sind Diphenylphenol, Bisphenol A, Resorcin oder Hydrochinon oder deren chlorierte oder bromierte Derivaten.
- n: in der Formel (VII) kann, unabhängig voneinander, 0 oder 1 sein, vorzugsweise ist n gleich 1.
- k: steht für Werte von 0 bis 30, vorzugsweise für einen durchschnittlichen Wert von 0,3 bis 20, besonders bevorzugt 0,5 bis 10, insbesondere 0,5 bis 6.

Einsetzbar sind auch Mischungen aus 10 bis 90 Gew.-%, vorzugsweise 12 bis 40 Gew.-%, wenigstens einer Monophosphorverbindung der Formel (VI) und wenigstens einer oligomeren Phosphorverbindung beziehungsweise eines Gemisches von oligomeren Phosphorverbindungen wie in EP-A 363 608 beschrieben sowie Phosphorverbindungen gemäß Formel (VII) in Mengen von 10 bis 90 Gew.-%, vorzugsweise 60 bis 88 Gew.-%, bezogen auf die Gesamtmenge an Phosphorverbindungen, eingesetzt.

Monophosphorverbindungen der Formel (VI) sind insbesondere Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Mischungen aus monomeren und oligomeren Phosphorverbindungen der Formel (VII) weisen durchschnittliche k-Werte von 0,3 bis 20, bevorzugt 0,5 bis 10, insbesondere von 0,5 bis 6 auf.

Die genannten Phosphorverbindungen sind bekannt (vgl. z.B. EP-A-363 608, EP-A-640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die erfindungsgemäßen Formmassen enthaltend die Komponenten A bis E und gegebenenfalls weiteren bekannten Zusätzen wie Stabilisatoren, Farbstoffen, Pigmenten, Gleit- und Entformungsmitteln, Nukleiermittel, Nanopartikel sowie Antistatika und Verstärkungsmaterialien und Flammschutzmittel, werden hergestellt, indem man die jeweiligen Bestandteile in bekannter Weise vermischt und bei Temperatuem von 200°C bis 300°C in üblichen Aggregaten wie Innenknetem, Extrudern und Doppelwellenschnecken schmelzcompoundiert und schmelzextrudiert, wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguss hergestellt werden. Beispiele für herstellbare Formkörper sind: Gehäuseteile jeder Art, z. B. für Haushaltsgeräte wie Saftpressen, Kaffeemaschinen, Mixer, für Büromaschinen wie Monitore, Drucker, Kopierer oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Weiterhin können die erfindungsgemäßen Formmassen beispielsweise zur Herstellung von folgenden Formkörpern bzw. Formteilen verwendet werden:

Innenausbauteile für Schienenfahrzeuge, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser und Gehäuse für Gartengeräte.

Besonders geeignet sind die Formmassen zur Herstellung von Formteilen, wo besonders hohe Ansprüche an die Wärmeformbeständigkeit der eingesetzten Kunststoffe gestellt werden (z.B. stromführende Komponenten).

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

- A₁: Lineares Polycarbonat auf Basis Bisphenol A mit einer relativen Lösungsviskosität von 1,252, gemessen in CH₂Cl₂ als Lösungsmittel bei 25°C in einer Konzentration von 0,5 g/100 ml.
- A₂: Lineares Polycarbonat auf Basis Bisphenol A mit einer relativen Lösungsviskosität von 1,203, gemessen in CH₂Cl₂ als Lösungsmittel bei 25°C in einer Konzentration von 0,5 g/100 ml.

### Komponente B

Pfropfpolymerisat von 45 Gew.-Teilen eines Copolymerisats aus Styrol und Acrylnitril im Gewichtsverhältnis von 72:28 auf 55 Gew.-Teile teilchenförmigen vemetzten Polybutadienkautschuk (mittlerer Teilchendurchmesser d₅₀ = 0,4 µm), hergestellt durch Emulsionspolymerisation.

### Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente D

Phosphonatamin der Formel:

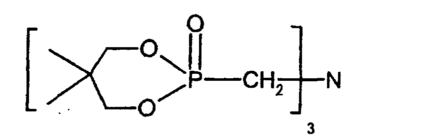

### (XPM 1000 Entwicklungsprodukt Fa. Solutia Inc., St. Louis, Mo.)

### Komponente E

Blendex 446, General Electric, N.Y. USA: Batch aus SAN/Teflon im Gewichtsverhältnis I:1.

### Herstellung und Prüfung der erfindungsgemäßen Formmassen

Das Mischen der Komponenten A bis E erfolgt auf einem 3-1-Innenkneter. Die Formkörper werden auf einer Spritzgießmaschine Typ Arburg 270 E bei 260°C hergestellt.

Die Bestimmung der Wärmeformbeständigkeit nach Vicat B erfolgt gemäß DIN 53 460.

Die Zusammensetzung der geprüften Materialien sowie die erhaltenen Daten sind in der folgenden Tabelle zusammengefasst.

**Tabelle 1:**

| Zusammensetzung und Eigenschaften der Polycarbonat-ABS-Formmassen | |
|---|---|
| Beispiel | 1 |
| Komponente | |
| [Gew.-Teile] | |
| A₁ | 41,70 |
| A₂ | 25,90 |
| B | 10.50 |
| C | 8.80 |
| D | 11.90 |
| E | 0.8 |
| Entformungsmittel | 0.4 |

| Eigenschaften | |
|---|---|
| Vicat B120 [°C] | 116° |
| UL 94 V [3,2 mm] | VO |
| Gesamt-Nachbrennzeit [s] | 5 |

Die erfindungsgemäßen Formmassen, die flammwidrig sind, zeichnen sich durch eine hohe Wärmeformbeständigkeit aus und sind juicing-arm, d.h. es kommt zu keinen Ablagerungen auf der Oberfläche.

## Patentansprüche

1. Zusammensetzung enthaltend
A) 5 bis 95Gew.-Teile aromatisches Polycarbonat und/ oder Polyestercarbonat
B) 1 bis 60 Gew.-Teile eines Pfropfpolymerisats von
B.1 5 bis 95 Gew.-% einem oder mehreren Vinylmonomeren auf
B.2 5 bis 95 Gew.-% einem oder mehreren Pfropfgrundlagen mit einer Glasumwandlungstemperatur < 10°C und einer mittleren Teilchengröße (d₅₀-Wert) von 0,05 bis 5 µm,
C) 0 bis 50 Gew.-Teile thermoplastisches Vinyl(co)polymerisat und/oder Polyalkylenterephthalat,
D) 0,1 bis 30 Gew.-Teile eines Phosphonatamins oder ein Gemisch der Formel (I)
A_{3-y}-N-B_{y} (I),
wobei
A für 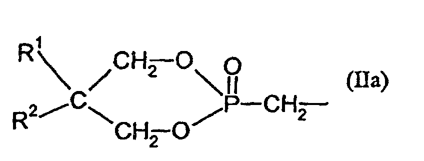 oder 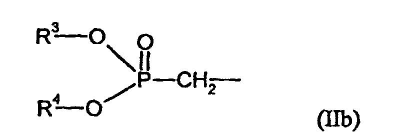 und
R¹ und R² unabhängig voneinander für unsubstituiertes oder substituiertes C₁-C₁₀-Alkyl oder für unsubstituiertes oder substituiertes C₆-C₁₀-Aryl, stehen,
R³ und R⁴ unabhängig voneinander für unsubstituiertes oder substituiertes C₁-C₁₀-Alkyl oder unsubstituiertes oder substituiertes C₆-C₁₀-Aryl stehen oder
R³ und R⁴ zusammen für unsubstituiertes oder substituiertes C₃-C₁₀-Alkylen stehen,
y die Zahlenwerte 0, 1 oder 2 bedeuten und
B unabhängig für Wasserstoff, gegebenenfalls halogeniertes C₂-C₈-Alkyl, unsubstituiertes oder substituiertes C₆-C₁₀-Aryl steht.

2. Blends nach Anspruch 1, enthaltend 2 bis 25 Gew.-Teile der Komponente D.

3. Blends nach Anspruch 1, enthaltend 2 bis 20 Gew.-Teile der Komponente D.

4. Blends nach einem der Ansprüche 1 , enthaltend Phosphonatamine ausgewählt aus der Gruppe 5,5,5',5',5",5"-Hexamethyltris(1,3,2-dioxaphosphorinanmethan)amino-2,2',2"-trioxid der Formel (I-1) 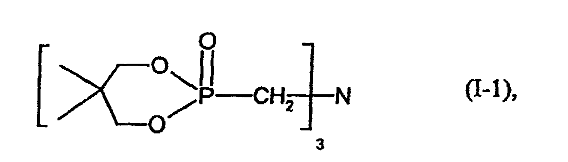 1,3,2-Dioxaphosphorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-dichloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

5. Blends nach einem der vorhergehenden Ansprüche enthaltend Pfropfpolymerisate auf Basis von mindestens 2 der folgenden Monomere: Chloropren, Butadien-1,3, Isopropen, Styrol, substituierte Styrole, Acrylnitril, Ethylen, Propylen, Vinylacetat und (Meth)-Acrylsäureester mit 1 bis 18 C-Atomen in der Alkoholkomponente.

6. Blends nach einem der vorhergehenden Ansprüche enthaltend als Komponente B) Pfropfpolymerisate aus
B.1 5 bis 95 Gew.-Teile, einer Mischung aus
B.1.1 50 bis 99 Gew.-Teilen Styrol, α-Methylstyrol, halogen- oder methylkernsubstituierten Styrolen, Methylmethacrylat oder Mischungen dieser Verbindungen und
B.1.2 1 bis 50 Gew.-Teilen Acrylnitril, Methacrylnitril, Methylmethacrylat, Maleinsäureanhydrid, C₁-C₄-alkyl- bzw. phenyl-N-substituierten Maleinimiden oder Mischungen dieser Verbindungen auf
B.2 5 bis 95, vorzugsweise 20 bis 70 Gew.-Teilen Polymerisat mit einer Glasübergangstemperatur unter -10°C.

7. Blends nach einem der Ansprüche 1 bis 6 enthaltend 10 bis 90 Gew.-Teile der Komponente A) und 1 bis 40 Gew.-Teile der Komponente B.

8. Blends nach einem der Ansprüche 1 bis 7 enthaltend 20 bis 80 Gew.-Teile der Komponente A und 2 bis 30 Gew.-Teile der Komponente B.

9. Blends nach Anspruch 6, wobei die Pfropfgrundlage B.2 ein Dienkautschuk, Acrylatkautschuk, Silikonkautschuk oder Ethylen-Propylen-Dien-Kautschuk ist.

10. Blends nach einem der vorhergehenden Ansprüchen, die 0,01 bis 35 Gew.-%, bezogen auf die Gesamtformmasse, wenigstens eines weiteren Flammschutzmittels enthalten.

11. Blends nach einem der vorhergehenden Ansprüche enthaltend 1 bis 30 Gewichtsteile der Komponente C).

12. Blends nach einem der vorhergehenden Ansprüche, enthaltend eine feinstteilige Verbindung der 1. bis 5. Hauptgruppe oder der 1. bis 8. Nebengruppe des Periodensystems mit mindestens einem Element ausgewählt aus der Gruppe von Sauerstoff, Schwefel, Bor, Kohlenstoff, Phosphor, Stickstoff, Wasserstoff und Silizium.

13. Blends nach einem der vorhergehenden Ansprüche, welche mindestens einen Zusatz aus der Gruppe der Stabilisatoren, Pigmente, Entformungsmittel, Fließhilfsmittel, anorganische Verstärkungsmaterialien, Nanopartikeln und/oder Antistatika enthalten.

14. Verwendung der Blends nach einem der vorhergehenden Ansprüche zur Herstellung von Formkörpern.

15. Formkörper, erhältlich aus Blends nach einem der vorhergehenden Ansprüche.

## Claims

1. Composition containing
A) 5 to 95 parts by weight of aromatic polycarbonate and/or polyester carbonate
B) 1 to 60 parts by weight of a graft polymer of
B.1 5 to 95 wt.% one or more vinyl monomers on
B.2 5 to 95 wt.% one or more polymer backbones with a glass transition temperature of <10°C and an average particle size (d₅₀ value) of 0.05 to 5 µm,
C) 0 to 50 parts by weight of thermoplastic vinyl (co)polymer and/or polyalkylene terephthalate,
D) 0.1 to 30 parts by weight of a phosphonate amine or a mixture of formula (I)
A_{3-y}-N-B_{y} (I),
wherein
A denotes 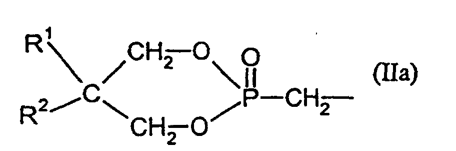 or 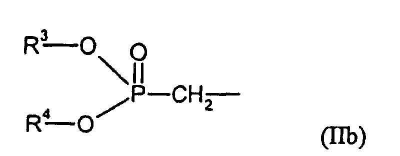 and
R¹ and R², independently of one another, denote unsubstituted or substituted C₁-C₁₀ alkyl or unsubstituted or substituted C₆-C₁₀ aryl,
R³ and R⁴, independently of one another, denote unsubstituted or substituted C₁-C₁₀ alkyl or unsubstituted or substituted C₆-C₁₀ aryl,
R³ and R⁴ together denote unsubstituted or substituted C₃-C₁₀ alkylene,
y signifies the numerical values 0, 1 or 2 and
B independently denotes hydrogen, optionally halogenated C₂-C₈ alkyl or unsubstituted or substituted C₆-C₁₀ aryl.

2. Blends according to claim 1, containing 2 to 25 parts by weight of component D.

3. Blends according to claim 1, containing 2 to 20 parts by weight of component D.

4. Blends according to any one of claims 1, containing phosphonate amines selected from the group of 5,5,5'5',5'',5''-hexamethyltris(1,3,2-dioxa-phosphorinanemethane)amin-2,2',2''-trioxide of formula (I-1) 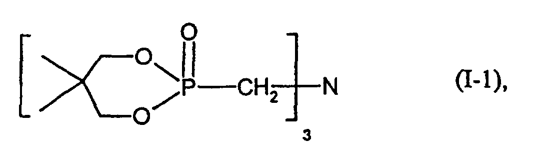 1,3,2-dioxaphosphorinane-2-methanamine, N-butyl-N[(5,5-dimethyl-1,3,2-dioxaphosphorinan-2-yl)methyl]-5,5-dimethyl-, P,2-dioxides; 1,3,2-dioxaphosphorinane-2-methanamine, N-[(5,5-dimethyl-1,3,2-dioxaphosphorinan-2-yl)methyl]-5,5-dimethyl-N-phenyl-, P,2-dioxide; 1,3,2-dioxaphosphorinane-2-methanamine, N,N-dibutyl-5,5-dimethyl-, 2-oxide, 1,3,2-dioxaphosphorinane-2-methanimine, N-[(5,5-dimethyl-1,3,2-dioxaphosphorinan-2-yl)methyl]-N-ethyl-5,5-dimethyl-, P,2-dioxide, 1,3,2-dioxaphosphorinane-2-methanamine, N-butyl-N-[(5,5-dichloromethyl-1,3,2-dioxaphosphorinan-2-yl)methyl]-5,5-dichloromethyl-, P,2-dioxide, 1,3,2-dioxaphosphorinane-2-methanamine, N-[(5,5-dichloromethyl-1,3,2-dioxaphosphorinan-2-yl)methyl]-5,5-dichloromethyl-N-phenyl, P,2-dioxide; 1,3,2-dioxaphosphorinane-2-methanamine, N,N-di-(4-chlorobutyl)-5,5-dimethyl-2-oxides; 1,3,2-dioxaphosphorinane-2-methanimine, N-[(5,5-dimethyl-1,3,2-dioxaphosphorinan-2-yl)methane]-N-(2-chloroethyl)-5,5-di(chloromethyl)-, P2-dioxide.

5. Blends according to any one of the preceding claims containing graft polymers based on at least 2 of the following monomers: chloroprene, 1,3-butadiene, isopropene, styrene, substituted styrenes, acrylonitrile, ethylene, propylene, vinyl acetate and (meth)acrylate with 1 to 18 C atoms in the alcohol component.

6. Blends according to any one of the preceding claims containing as component B) graft polymers of
B.1 5 to 95 parts by weight of a mixture of
B.1.1 50 to 99 parts by weight styrene, α-methylstyrene, styrenes substituted in the ring with halogen or methyl, methyl methacrylate or mixtures of these compounds and
B.1.2 1 to 50 parts by weight acrylonitrile, methacrylonitrile, methyl methacrylate, maleic anhydride, C₁-C₄ alkyl- or phenyl-N-substituted maleimides or mixtures of these compounds on
B.2 5 to 95, preferably 20 to 70 parts by weight polymer with a glass transition temperature of less than -10°C.

7. Blends according to any one of claims 1 to 6 containing 10 to 90 parts by weight of component A) and 1 to 40 parts by weight of component B.

8. Blends according to any one of claims 1 to 7 containing 20 to 80 parts by weight of component A and 2 to 30 parts by weight of component B.

9. Blends according to claim 6, wherein the polymer backbone B.2 is a diene rubber, polyacrylate rubber, silicone rubber or ethylene-propylene-diene rubber.

10. Blends according to any one of the preceding claims, which contain 0.01 to 35 wt.%, based on the total moulding composition, of at least one additional flame retardant.

11. Blends according to any one of the preceding claims containing 1 to 30 parts by weight of component C).

12. Blends according to any one of the preceding claims containing an extremely fine-particle compound of main groups 1 to 5 or of subgroups 1 to 8 of the periodic table with at least one element selected from the group of oxygen, sulfur, boron, carbon, phosphorus, nitrogen, hydrogen and silicon.

13. Blends according to any one of the preceding claims which contain at least one additive from the group of stabilisers, pigments, mould release agents, flow promoters, inorganic reinforcing materials, nanoparticles and/or antistatic agents.

14. Use of the blends according to any one of the preceding claims for the production of mouldings.

15. Mouldings obtainable from blends according to any one of the preceding claims.

## Revendications

1. Composition contenant
A) 5 à 95 parties en poids d'un polycarbonate et/ou d'un polyestercarbonate aromatique
B) 1 à 60 parties en poids d'un polymère greffé de
B.1 5 à 95 % en poids d'un ou plusieurs monomères vinyliques
B.2 5 à 95 % en poids d'une ou plusieurs bases greffées avec une température de transition vitreuse < 10°C et une grosseur particulaire moyenne (valeur d50) de 0,05 à 5 µm,
C) 0 à 50 parties en poids d'un (co)polymère vinylique thermoplastique et/ou d'un polytéréphtalate d'alkylène,
D) 0,1 à 3Q parties en poids d'une phosphonatamine ou d'un mélange de formule (I)
A_{3-y}-N-B_{y} (I),
où
A est 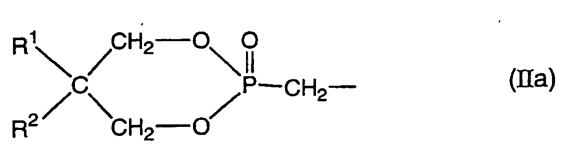 ou 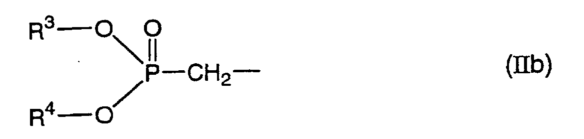 et
R¹ et R² indépendamment l'un de l'autre représentent un groupe alkyle en C₁-C₁₀ non substitué ou substitué ou un groupe aryle en C₆-C₁₀ non substitué ou substitué,
R³ et R⁴ représentent indépendamment l'un de l'autre un groupe alkyle en C₁-C₁₀ non substitué ou substitué ou un groupe aryle en C₆-C₁₀ non substitué ou substitué ou
R³ et R⁴ représentent ensemble un groupe alkylène en C₃-C₁₀ non substitué ou substitué,
y signifie la valeur numérique 0, 1 ou 2 et
B représente indépendamment de l'hydrogène, un groupe alkyle en C₂-C₈ éventuellement halogéné, aryle en C₆-C₁₀ non substitué ou substitué.

2. Mélanges selon la revendication 1, contenant 2 à 25 parties en poids du composant D.

3. Mélanges selon la revendication 1, contenant 2 à 20 parties en poids du composant D.

4. Mélanges selon l'une des revendications 1, contenant une phosphonamine choisie dans le groupe du 5,5,5',5',5",5"-hexaméthyl-tris(1,3,2-dioxaphosphorinanméthane)amino-2,2',2"-trioxyde de formule (I-1) 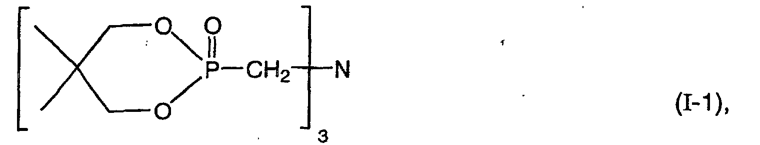 1,3,2-dioxaphosphorinan-2-méthanamin, N-butyl-N[(5,5-diméthyl-1,3,2-dioxaphosphorinan-2-yl)méthyl]-5,5-diméthyl-, P,2-dioxyde; 1,3,2-dioxaphosphorinan-2-méthanamin, N-[[5,5-diméthyl-1,3,2-dioxaphosphorinan-2-yl)méthyl]-5,5-diméthyl-N-phényl-, P,2-dioxyde; 1,3,2-dioxa-phosphorinan-2-méthanamin, N,N-dibutyl-5,5-diméthyl-, 2-oxyde, 1,3,2-dioxaphosphorinan-2-méthanimine, N-[(5,5-diméthyl-1,3,2-dioxaphosphorinan-2-yl)méthyl]-N-éthyl-5,5-diméthyl-, P,2-dioxyde, 1,3,2-dioxaphosphorinan-2-méthanamin, N-butyl-N-[(5,5-dichlorométhyl-1,3,2-dioxaphosphorinan-2-yl)-méthyl]-5,5-di-chlorométhyl-, P,2-dioxyde, 1,3,2-dioxa-phosphorinan-2-méthanamin, N-[(5,5-di-chlorométhyl-1,3,2-dioxaphosphorinan-2-yl)méthyl]-5,5-di-chloro-méthyl-N-phényl-, P,2-dioxyde ; 1,3,2-dioxaphosphorinan-2-méthanamin, N,N-di-(4-chlorobutyl)-5,5-diméthyl-2-oxyde; 1,3,2-dioxaphosphorinan-2-méthanamin, N-[(5,5-diméthyl-1,3,2-dioxaphosphorinan-2-yl)méthan]-N-(2-chloroéthyl)-5,5-di(chlorométhyl), P2-dioxyde.

5. Mélanges selon l'une des revendications précédentes contenant des polymères greffés à base d'au moins 2 des monomères suivants : chloroprène, 1,3-butadiène, isopropène, styrène, styrène substitué, acrylonitrile, éthylène, propylène, acétate de vinyle et ester d'acide (méth)-acrylique avec 1 à 18 atomes de C dans le composant alcool.

6. Mélanges selon l'une des revendications précédentes contenant comme composant B) des polymères greffés de
B.1 5 à 95 parties en poids d'un mélange de
B.1.1 50 à 99 parties en poids de styrène, α-méthylstyrène, styrolène halogéno ou méthyle substitué sur le noyau, méthacrylate de méthyle ou des mélanges de ces composés et
B.1.2 1 à 50 parties en poids d'acrylonitrile, méthacrylonitrile, méthacrylate de méthyle, anhydride maléique, maléimides alkyl en C₁-C₄ ou phényl-N-substitués ou des mélanges de ces composés
B.2 5 à 95, de préférence 20 à 70 parties en poids de polymère avec une température de transition vitreuse inférieure à - 10°C.

7. Mélanges selon l'une des revendications 1 à 6 contenant 10 à 90 parties en poids du composant A) et 1 à 40 parties en poids du composant B.

8. Mélanges selon l'une des revendications 1 à 7 contenant 20 à 80 parties en poids du composant A et 2 à 30 parties en poids du composant B.

9. Mélanges selon la revendication 6, dans lesquels la base de greffage B.2 est un caoutchouc diène, ûn caoutchouc acrylate, un caoutchouc silicone ou un caoutchouc éthylène - propylène - diène.

10. Mélanges selon l'une des revendications précédentes, qui contiennent 0,01 à 35 % en poids, rapporté à la matière moulable totale, d'au moins un autre agent ignifugeant.

11. Mélanges selon l'une des revendications précédentes contenant 1 à 30 parties en poids du composant C).

12. Mélanges selon l'une des revendications précédentes, contenant un composé pulvérulent des groupes principaux 1 à 5 ou des groupes secondaires 1 à 8 du tableau périodique avec au moins un élément choisi dans le groupe de l'oxygène, le soufre, le bore, le carbone, le phosphore, l'azote, l'hydrogène et le silicium.

13. Mélanges selon l'une des revendications précédentes, qui contiennent au moins un additif du groupe des stabilisants, pigments, des agents de démoulage, des agents d'écoulement, des matériaux de renforcement inorganiques, des nanoparticules et/ou des agents antistatiques.

14. Utilisation des mélanges selon l'une des revendications précédentes pour la préparation de corps moulés.

15. Corps moulés, susceptibles d'être obtenus à partir de mélanges selon l'une des revendications précédentes.
